Europäisches Patentamt

European Patent Office

Office européen des brevets

(19)

(11) Veröffentlichungsnummer: **0 300 169**
**B1**

(12) EUROPÄISCHE PATENTSCHRIFT

(45) Veröffentlichungstag der Patentschrift:
12.09.90

(51) Int. Cl.⁵: **F16L 55/12**

(21) Anmeldenummer: **88108582.3**

(22) Anmeldetag: **28.05.88**

(54) Rohrdichtkissen mit Durchführung.

(30) Priorität: **23.07.87 DE 3724372**

(43) Veröffentlichungstag der Anmeldung:
**25.01.89 Patentblatt 89/4**

(45) Bekanntmachung des Hinweises auf die Patenterteilung:
**12.09.90 Patentblatt 90/37**

(84) Benannte Vertragsstaaten:
**AT CH DE FR GB IT LI NL SE**

(56) Entgegenhaltungen:
**DE-A- 2 748 614**
**FR-A- 2 343 195**
**FR-A- 2 577 653**
**GB-A- 2 099 541**

(73) Patentinhaber: **VEPRO GmbH, Blatzheimer Strasse 12,
D-5352 Zülpich(DE)**

(72) Erfinder: **Vetter, Manfred, Burg Langendorf,
D-5352 Zülpich(DE)**

(74) Vertreter: **Bauer, Wulf, Dr., Wolfgang-Müller-Strasse 12,
D-5000 Köln 51 (Marienburg)(DE)**

ACTORUM AG

**Beschreibung**

Die Erfindung bezieht sich auf ein Prüfkissen mit Durchführung nach dem Oberbegriff des Patentanspruchs 1.

Mit derartigen Prüfkissen kann eine Rohrleitung verschlossen und dennoch über die Durchführung getestet werden. Die Rohrleitung kann dabei stromabwärts des zu prüfenden oder zu reparierenden Bereichs, oder auch oberhalb und unterhalb dieses Bereichs, zuverlässig, praktisch und schnell abgedichtet werden. Durch die Prüfung können Folgeschäden, insbesondere Umweltverschmutzungen durch Ausbreiten oder Austreten von Abwässern oder anderen, grundwassergefährlichen Flüssigkeiten vermieden werden. Es können Rohrleitungen unmittelbar nach der Verlegung geprüft werden, um so ihre Dichtigkeit festzustellen, es können aber auch in Betrieb befindliche Rohrleitungen überprüft werden.

Das Prüfkissen der eingangs genannten Art ist aus der DE-A 2 748 614 bekannt. Dieses Prüfkissen hat im wesentlichen ebene Stirnwände, die becherförmige Ansätze haben und dort mit der Innenfläche des äußeren Mantels durch Vulkanisation verbunden sind. In den Stirnwänden sind Metalldurchführungen angeordnet, die auf der Innenseite mittels Rohrschellen mit einem Schlauch verbunden sind, der an seinem anderen Ende wiederum mit einer metallischen Durchführung, die in der anderen Stirnwand vorgesehen ist, in Verbindung steht. Die so geschaffene Durchführung hat jedoch mehrere Nachteile: Sie eignet sich nur für den Durchlaß strömungsfähiger Medien, also Flüssigkeiten und Gase. Für starre Teile, wie beispielsweise eine Stange, eine Sonde oder ein Rohr, 30 ist sie nicht geeignet, und zwar nicht nur wegen ihrer zwangsläufigen Abweichung von einer geraden Achslinie, sondern insbesondere wegen ihres zu kleinen Durchmessers. Darüberhinaus ist eine dauerhafte Abdichtung insbesondere im Bereich der Verbindung des Schlauches mit den metallischen Durchführungen nicht gewährleistet. Diese Verbindungsbereiche sind nach Fertigstellung des Prüfkissens nicht mehr zugänglich, sie müssen so dauerhaft und sicher sein, daß sie keine Schwachstellen bilden. Auch die Abdichtung zwischen der metallischen, hülsenförmigen Durchführung und der Stirnwand muß die gleiche Qualität aufweisen, da auch dieses Teil nicht mehr ausgewechselt werden kann, ohne das Kissen zu zerstören. Das vorbekannte Prüfdichtkissen hat mithin eine gewisse Anzahl von Verbindungen, die allesamt während einer längeren Zeit dicht sein und mechanisch halten müssen. Schon die größere Anzahl der Verbindungen läßt die Fehlermöglichkeiten ansteigen. Schließlich muß beim praktischen Einsatz stets beachtet werden, daß die von außen zugänglichen Gewindebereiche der hülsenartigen, metallischen Durchführungen nicht beschädigt werden. Zwar kann das Gewinde dort nachgeschnitten werden, die Anzahl derartiger Nachbearbeitungsvorgänge ist aber sehr beschränkt, das Prüfkissen ist als Prüfkissen unbrauchbar, wenn die Anschlüsse verdorben sind.

Bei dem Prüfkissen nach der FR-A 2 577 653 sind in die beiden zentralen Öffnungen der Stirnwände ein Rohrstück eingesetzt, das mit einer Stirnwand fest verbunden ist und in einer Dichtungshülse gleitet, die an der anderen Stirnwand befestigt ist.

Schließlich ist aus der FR-A 2 343 195 eine Vorrichtung und ein Verfahren zum Einleiten eines wurzelhemmenden Schaums in eine Kanalisation bekannt, darin wird ein Rohrdichtkissen beschrieben, das einen zentrischen, eingelegten Rohrmantel aus armiertem Gummimaterial aufweist, der an seinen beiden Enden mit den beiden Stirnwänden verbunden ist. Durch diesen Rohrmantel wird der flexible Injektionsschlauch für den Schaum verschiebbar hindurchgeführt, dieser Schlauch hat eine Länge, die deutlich größer ist als die Länge des Rohrdichtkissens.

Ausgehend von dem Prüfkissen der eingangs genannten Art hat sich die Erfindung die Aufgabe gestellt, dieses Kissen dahingehend weiterzuentwickeln, daß durch die Durchführung auch starre Teile hindurchbewegt werden können, eine dauerhafte Abdichtung mit verbesserter Langzeitqualität erreicht wird, ein größerer, freier Innenquerschnitt der Durchführung möglich ist und austauschbare Einsätze für die Durchführung verwendet werden können.

Diese Aufgabe wird gelöst durch ein Prüfkissen mit den Merkmalen des Patentanspruchs 1.

Um nun die so gebildete Durchführung auch abschließen oder etwas an ihr anschließen zu können, schlägt die Erfindung vor, in den aus dem Rohrmantel gebildeten Schlauch ein Rohrstück aus starrem Material, beispielsweise ein Kunststoffrohr, einzufügen, das mit seiner Außenwand an der Innenwand des Rohrmantels anliegt. Beim Füllen des Prüfdichtkissens wird der Rohrmantel zusammengepreßt und legt sich dadurch ebenso abdichtend um das von ihm umschlossene Rohrstück, wie sich der äußere Mantel an die Innenwandung eines abzudichtenden Rohres anlegt. Die so erzielte Abdichtung zwischen dem eingefügten Rohrstück und dem Rohrmantel benötigt keine speziellen Verbindungen zwischen Metall und Gummi, wie dies beim Prüfkissen nach dem Stand der Technik der Fall war. Die Abdichtung erfolgt zudem über eine ausgesprochen große Fläche, so daß sie zuverlässig und sicher ist. Das Rohrstück kann aus dem Prüfkissen herausgezogen und durch ein anderes Rohrstück versetzt werden, so daß das Prüfkissen hierdurch einerseits wesentlich vielseitiger eingesetzt werden kann, beispielsweise kann im Rohrstück eine Durchlaßleitung, eine Abdichtung für eine bewegliche Stange usw. vorgesehen und in beliebiger Kombination vorliegen und andererseits kann das Rohrstück ausgetauscht werden, wenn es irgendwie beschädigt sein sollte, ohne daß hierdurch das Prüfkissen selbst weggeworfen werden müßte. Ein wesentliches Merkmal der Erfindung besteht also darin, daß das Prüfkissen aus einem eigentlichen Dichtkörper, der praktisch ausschließlich aus Gummi gefertigt ist, und einem Einsatz in Form des Rohrstücks, das für den jeweiligen Verwendungszweck noch speziell weitergebildet wird, besteht. Gummi-

Metall-Verbindungen, die Dichtigkeitsprobleme aufwerfen könnten, werden auf diese Weise vermieden. Das Rohrstück kann mit elektrischen Leitungen, mit Prüfvorrichtungen beliebiger Art ausgerüstet werden, einzelne Rohrstücke können untereinander ausgetauscht und in den Dichtkörper eingeführt werden, solange dieser nicht druckgefüllt ist.

Erfindungsgemäß lassen sich wesentlich größere freie Innenquerschnitte der Durchführung erreichen. Dabei ergibt sich auf Grund des eingefügten Rohrstücks noch der zusätzliche Vorteil, daß der zur Verfügung stehende, freie Innenquerschnitt der Durchführung, also der Innenquerschnitt des Rohrstücks, sich beim Füllen des Dichtkörpers geometrisch nicht verändert. Bei den nach dem Stand der Technik verwendeten Schläuche war beim Füllen des Prüfkissens zumindest nicht auszuschließen, daß sich der Innenquerschnitt der Schläuche druckbedingt verringerte.

Das starre Rohrstück bietet schließlich einen mechanischen Schutz für den eigentlichen Dichtkörper, wenn durch die Durchführung starre Teile, wie zum Beispiel Stangen oder dergleichen, hindurchgeführt werden. Es ist auf diese Weise sogar möglich, angetriebene Teile, zum Beispiel Wellen, eine Spirale einer Rohrreinigungsmaschine usw. durch die Durchführung zu leiten, ohne daß befürchtet werden muß, daß dadurch die bewegten Teile dichtende Gummibereiche geschwächt oder zerstört oder Verbindungen zwischen Gummi und Metall gelockert werden.

Das Rohrstück steht gegenüber beiden Stirnwänden vor und hat an einem Ende, vorzugsweise an der Stirnwand mit dem Anschluß, einen Flansch. Mit diesem Flansch kann in ein Gegenflansch eines durch die Durchführung hindurchzuleitenden Teils verbunden werden.

Auf diese Weise ist es nicht nötig, das Rohrstück selbst auszutauschen, vielmehr werden die Einsätze jeweils nur mit dem Flansch des Rohrstücks verbunden und können unterschiedliche Einsätze alternativ am Flansch angeschlossen werden. Der Flansch ist vorzugsweise für eine Schnellverbindung ausgelegt, es eignet sich beispielsweise Bajonettverbindungen, Schnellspannflansche und dergleichen.

Das Rohrstück hat an seinem anderen Ende, das sich außerhalb der mit dem Anschluß versehenen Stirnwand befindet, entweder ebenfalls einen Flansch oder eine Aufweitung, die größer ist als die Innenabmessungen des Rohrmantels. Diese Aufweitung bzw. der (zweite) Flansch stellen sicher, daß ein an dieser Seite offenes Rohrstück nicht durch einen abgesperrten Druck aus dem Rohrmantel und damit dem Dichtkörper herausgedrückt werden kann. Sie vermeidet zudem, daß das Rohrstück bei entspanntem Dichtkörper versehentlich aus diesem herausrutschen kann.

Vorteilhaft ist es, den Rohrmantel aus einem rechteckförmigen Zuschnitt aufzubauen, der in Axialrichtung des Prüfkissens verlaufende, zugfeste, biegsame Armierungsfäden hat. Dabei sind die Armierungsfäden vorzugsweise bis in die Stirnwände hineingezogen. Sie können dann hohe Zugkräfte, wie sie beim Füllen des Kissens zwischen den Stirnwänden auftreten, abfangen und aufnehmen. Andererseits vermeidet eine Axialarmierung eine unerwünscht große Durchmesserveränderung zwischen aufgeblasenem und nichtaufgeblasenem Zustand. In einer Alternative kann anstelle einer Axialarmierung aber auch eine Armierung auf einer Schraubnelinie eingesetzt werden. Hierdurch wird die Abichtung zwischen der Innenwand des Rohrmantels und der Außenwand des starren Rohrstücks verbessert. Schließlich ist es vorteilhaft, die Armierung und die Armierungsrichtung des äußeren Mantels mit der Armierung des Rohrmantels abzustimmen, beispielsweise in beiden Fällen eine schraubenlinienförmig verlaufende oder eine axiale Armierung zu wählen, so daß zwischen gefülltem Zustand und leerem Zustand des Prüfkissens keine zu großen Längedifferenzen der beiden Mäntel auftreten. Für die Armierung des Rohrmantels haben sich vorzugsweise textile Fäden und Kunststofffäden bewährt, eine Armierung mit Stahl, beispielsweise in Form von Stahlcord ist möglich, kann aber aus Kostengründen entfallen, weil der Rohrmantel im Betrieb durch das starre Rohrstück abgestützt wird, so daß ein Bersten des Rohrmantels praktisch nicht auftreten kann.

Die Verbindung des Rohrmantels mit den Stirnwänden wird möglichst in gleicher Weise und Qualität durchgeführt, wie die Verbindung der Stirnwände mit dem äußeren Mantel. Insbesondere hat es sich als vorteilhaft erwiesen, die Armierungsfäden beider Mäntel in die Stirnwände hineinzuziehen und die Stirnwände durch diese Mantelfäden zu armieren.

Schließlich ist es vorteilhaft, die Stirnwände konvex zu wölben und vorzugsweise als Kugelkappen auszubilden. Längendifferenzen zwischen dem äußeren Mantel und dem Rohrmantel zwischen gefülltem und entleertem Zustand des Prüfkissens können so besser ausgeglichen werden. Weiterhin wird der Übergang zwischen äußerem Mantel und Stirnwand beim Füllen weniger stark belastet, als dies bei dem Prüfkissen nach dem eingangs genannten Stand der Technik der Fall ist.

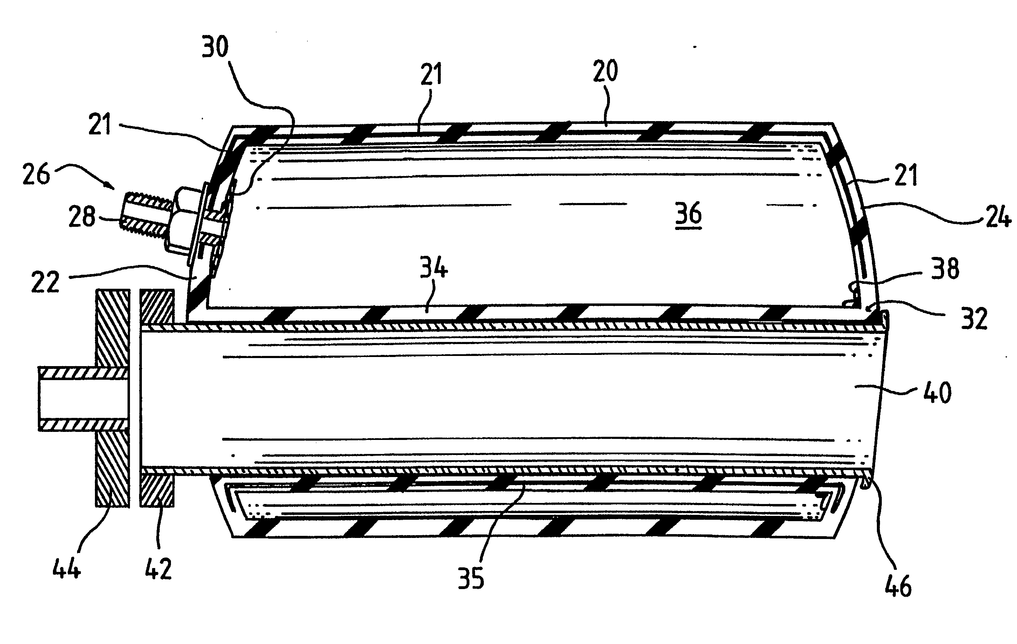

Weitere Vorteile und Merkmale der Erfindung ergeben sich aus den übrigen Ansprüchen und der nun folgenden Beschreibung eines nicht einschränkend zu verstehenden Ausführungsbeispiels der Erfindung, das unter Bezugnahme auf die Zeichnung im folgenden näher erläutert wird. Die Zeichnung zeigt in ihrer einzigen.

Figur einen Längsschnitt durch ein Prüfkissen nach der Erfindung. Das in der Figur gezeigte Prüfkissen hat einen zylindrischen, äußeren Mantel 20, der aus einem im wesentlichen rechteckförmigen Zuschnitt aus bahnförmigem, armiertem Gummimaterial hergestellt ist. Er ist mit zwei, ebenfalls aus Gummimaterial gefertigten Stirnwänden 22, 24 verbunden. Dabei laufen seine Armierungsfäden 21 in die Stirnwände 22, 24 hinein. Im gezeigten Ausführungsbeispiel ist der äußere Mantel 20 so armiert, daß die Armierungsfäden 21 in Axialrichtung verlaufen.

In die der Figur linke Stirnwand 22 ist ein Anschluß 26 eingesetzt. Er besteht aus einem im wesentlichen hülsenförmigen Metallteil, das innenseitig, einen Kragen aufweist. An der Ringfläche dieses Kragens ist eine Ringgummischeibe 30 angeklebt. Sie hat einen wesentlich größeren Durchmesser als der Kragen des hülsenförmigen Metallteils 28 und ist so auf einem Außenrandbereich mit der Innenwand der Stirnwand 22 verbunden, das zwischen diesem Außenrandbereich und dem Kragen ein unverbundener Ringbereich verbleibt, dieser Ringbereich kann Bewegungen zwischen dem Metallteil 28 und der Stirnwand 22 aufnehmen, ohne daß durch diese Bewegungen unmittelbar die Abdichtung zwischen Metallteil 28 und der Stirnwand 22 belastet wird.

Jede Stirnwand 22, 24 hat eine Öffnung 32, beide Öffnungen sind kreisförmig und fluchtend. An ihren Rändern liegt ein Rohrmantel 34 aus armiertem Gummimaterial an, der selbst eine die beiden Öffnungen 32 verbindenden und durch einen Innenraum 36 verlaufenden Schlauch bildet. Wie die figur zeigt, steht der Rohrmantel 34 an der Außenseite des Kissens nicht gegenüber der normalen Kontur der Stirnwände 22, 24, die kugelkappenförmig sind, vor. Der Rohrmantel 34 ist aus einem im wesentlichen rechteckförmigen Zuschnitt aus armiertem, bahnförmigen Gummimaterial hergestellt. Seine Armierungsfäden 35 verlaufen in die Stirnwände 22, 24 hinein. Hierdurch wird eine ausreißfeste, sichere Verbindung erzielt. Zusätzlich kann im Innenraum 36 die Innenseite einer Stirnwand 22 mit der angrenzenden Außenfläche des Rohrmantels 34 durch ein Ringteil 38, das ein L-förmiges Profil hat, verbunden sein. Es sichert die Abdichtung im kritischen Bereich des Übergangs zwischen Rohrmantel 34 und Stirnwand 22 bzw. 24. In der Figure ist es lediglich für die rechte Stirnwand 24 eingezeichnet.

Diebisher beschriebenen Teile des Prüfkissens bilden den sogenannten Dichtkörper. Er besteht, wie aus der Beschreibung ersichtlich ist, lediglich aus armiertem Gummimaterial. Seine Herstellung erfolgt nach einem im folgenden beschriebenen Verfahren, das für sich ebenfalls erfinderische Merkmale beinhaltet:

Auf ein starres Rohr, beispielsweise ein Stahlrohr oder Aluminiumrohr, dessen Außendurchmesser dem gewünschten Innendurchmesser des späteren Rohrmantels 34 entspricht, wird zunächst ein flüssiges oder festes Trennmittel aufgetragen, dann wird der Zuschnitt aus armiertem Gummimaterial um dieses als Formstück dienende Rohr gewickelt. Dabei kann schichtenweise verfahren werden: Zunächst kann eine unarmierte Lage aufgebracht werden, anschließend eine nylonarmierte Lage und schließlich wieder eine reine Gummilage. Der Zuschnitt ist jeweils so bemessen, daß er zumindest einmal vollständig und mit Überlappung um das Rohr gewickelt werden kann.

Hiervon ausgehend wird nun das weitere Prüfkissen, also der Dichtungskörper, aufgebaut. Es werden die Stirnwände mit ihren Öffnungen 32 über das Formrohrstück geschoben. Der Zuschnitt für den Rohrmantel ist so ausreichend lang bemessen, daß aus seinem Randbereich Armierungsfäden 36 herausgetrennt, die Randbereiche also umgebogen und sternförmig in die Fläche der Stirnwände 22 bzw. 24 geschlagen werden können. Schließlich wird der äußere Mantel 20 in Form eines Zuschnittes aufgebracht. Der so erstellte Dichtkörper wird in eine Vulkanisationsform eingelegt, mit Luft gefüllt und in einem Vulkanisierungsschritt fertiggestellt.

Nach erfolgter Vulkanisation wird das Formrohr herausgezogen und durch ein Rohrstück 40 ersetzt, wie es aus der Figur ersichtlich ist. Dieses ist aus HDPE gefertigt und hat einen Außendurchmesser, der es gestattet, das Rohrstück 40 in den Rohrmantel 34 einzuschieben. Dabei liegt das Rohrstück 40 mit seinem Außenmantel zumindest an einem Teilbereich der Innenwandung des Rohrmantels 34 an.

Das Rohrstück 40 geht außerhalb der mit dem Anschluß 26 versehenen Stirnwand 22 in einen Flansch 42 über. Dieser kann mit einem Gegenflansch 44, der ein Einsatzteil, beispielsweise eine Schlauchleitung, eine mechanische Durchführung, eine Dichtung für eine verschiebbare Stange oder dergleichen trägt, verbunden werden. Die beiden Flansche 42, 44 sind Schnellspannflansche.

Jenseits der anderen Stirnwand 24 hat das Rohrstück 40 eine Aufweitung 46, deren Außenabmessungen größer sind als die Innenabmessung des Rohrmantels 34. Sie ist durch mechanisch-thermisches Aufweiten des entsprechenden Endes des Rohrstücks 40 hergestellt. Sie ermöglicht, daß am anderen Ende des Rohrstücks 40 ein Zugmittel, beispielsweise ein Seil, befestigt werden kann und durch Zug am Rohrstück 40 das (druckfreie) Prüfkissen aus einer Rohrleitung herausgezogen werden, ohne daß das Rohrstück 40 aus dem Dichtkörper gezogen wird.

Um einen möglichst großen, freien Innendurchmesser des Rohrmantels 34 und damit des Rohrstücks 40 zu erhalten, ist die Achse des Rohrmantels 34 gegenüber der Achse des äußeren Mantels 20 versetzt. Der Versatz ist etwas geringer als der Radius des Rohrstücks 40. Der Anschluß 26 ist so positioniert, daß rings um ihn herum genügend Fleisch in Form von Stirnwandmaterial bleibt, insbesondere ist seine Entfernung vom äußeren Mantel 20 etwa gleichgroß zur Entfernung von den nächstgelegenen Teilen des Rohrmantels 34. Im gezeigten Ausführungsbeispiel beträgt der Außendurchmesser des äußeren Mantels 20 etwa fünfzehn Zentimeter, der lichte Innendurchmesser des Rohrstücks 40 liegt bei fünf Zentimetern. Damit liegt das Verhältnis beider Durchmesser bei drei zu eins, diese Zahl belegt, daß der lichte Durchmesser des Rohrstücks 40 relativ groß, jedenfalls viel größer als nach dem Stand der Technik, bezogen auf den Außendurchmesser des äußeren Mantels 20 ist. Es werden somit große Durchlaßquerschnitte im Bereich der Durchführung erreicht, die eine wesentlich vielfältigere Anwendung von Prüfkissen ermöglichen, als dies bislang der Fall war. Insbesondere können auch mechanische Arbeiten auf der anderen Seite des Prüfkissens durchgeführt werden.

## Patentansprüche

1. Prüfkissen mit Durchführung, das einen zylindrischen, äußeren Mantel (20) aus armiertem Gummimaterial und zwei aus Gummimaterial gefertigte Stirnwände (22, 24) hat, die durch Heißvulkanisation unter Innendruck in einer Form miteinander luftdicht verbunden sind und die einen Innenraum (36) begrenzen, der über einen in eine der Stirnwände (zum Beispiel 22) eingesetzten Anschluß (26) zugänglich ist, wobei jede Stirnwand (22, 24) eine Öffnung (32) aufweist und diese beiden Öffnungen (32) über einen durch den Innenraum (36) verlaufenden Schlauch miteinander verbunden sind, so daß die gegenüber dem Innenraum dichte und einen Durchlaß für strömungsfähiges Medium ermöglichende Durchführung ausgebildet wird, dadurch gekennzeichnet, daß der Schlauch aus einem vor dem Heißvulkanisieren eingelegten Rohrmantel (34) aus armierten Gummimaterial gebildet ist, der an seinen Enden mit den beiden Stirnwänden (22, 24) beim Vulkanisieren verbunden ist, daß sich innerhalb dieses Rohrmantels (34) ein Rohrstück (40) aus starrem Material, zum Beispiel Metall oder Kunststoff, befindet, das mit seiner Außenwand die Innenwand des Rohrmanels (34) berührt, daß gegenüber beiden Stirnwänden (22, 24) versteht und an einem Ende, vorzugsweise an der Stirnwand (22) mit dem Anschluß (26) einen Flansch (42) trägt und an dem anderen Ende entweder eine Aufweitung (46) aufweist, die größer ist als die Innenabmessungen des Rohrmantels (36) oder ebenfalls einen Flansch trägt.

2. Prüfkissen nach Anspruch 1, dadurch gekennzeichnet, daß der Innendurchmesser des Rohrmantels (34) zumindest dreißig Prozent des Außendurchmessers des äußeren Mantels (20) beträgt.

3. Prüfkissen nach Anspruch 1 oder 2, dadurch gekennzeichnet, daß der Rohrmantel (34) in Axialrichtung verlaufende, zugfeste, biegsame Armierungsfäden, vorzugsweise Nylonfäden, aufweist.

4. Prüfkissen nach einem der Ansprüche 1 bis 3, dadurch gekennzeichnet, daß das Rohrstück (40) so ausreichend mechanisch fest ist, daß es bei Belastung durch den Nennfülldruck, für den das Rohrdichtkissen ausgelegt ist, nicht deformiert wird.

5. Prüfkissen nach einem der Ansprüche 1 bis 4, dadurch gekennzeichnet, daß im Innenraum (36) die Innenseite einer Stirnwand (zum Beispiel 24) mit der angrenzenden Außenfläche des Rohrmantels (34) durch ein Ringteil (38), vorzugsweise durch einen bei radialem Schnitt L-förmigen Ringteil verbunden ist.

6. Prüfkissen nach einem der Ansprüche 1 bis 7, dadurch gekennzeichnet, daß der Rohrmantel (34) stirnseitig nicht gegenüber der Kontur der Stirnseiten (22, 24) übersteht.

7. Prüfkissen nach einem der Ansprüche 1 bis 6, dadurch gekennzeichnet, daß die Stirnwände (22, 24) konvex gewölbt sind und vorzugsweise als Kugelkappen ausgebildet sind, deren Radius größer ist als der Radius des (entspannten) äußeren Mantels (20) und vorzugsweise etwa der halben Gesamtlänge des Rohrdichtkissens entspricht.

8. Prüfkissen nach einem der Ansprüche 1 bis 7, dadurch gekennzeichnet, daß die Achsen des äußeren Mantels (20) und des Rohrmantels (34) parallel zueinander verlaufen und vorzugsweise einen Abstand voneinander haben, der zwischem dem ganzen und dem halben Radius des Rohrstücks (40) liegt.

## Claims

1. Testing cushion with through passage, which has a cylindrical outer casing (20) of armoured rubber material and two end walls (22, 24) which are made of rubber material, which are connected to one another in air-tight manner by hot vulcanization under internal pressure in a mould and which delimit an internal space (36) which accessible by way of a connection (26) set in one of the end walls (for example 22), each end wall (22, 24) having an opening (32) and these two openings (32) being connected to one another by way of a hose running through the internal space (36) so that the through passage which is sealed with respect to the internal space and which enables flowable medium to pass through is formed, characterized in that the hose is formed from a tubular casing (34) of armoured rubber material inserted before the hot vulcanization and connected at its ends to the two end walls (22, 24) during vulcanization, and in that there is within this tubular casing (34) a tubular piece (40) of rigid material, for example metal or plastics, which touches by means of its outer wall the inner wall of the tubular casing (34), and which projects beyond both end walls (22, 24) and carries at one end, preferably at the end wall (22) having the connection (26), a flange (42) and at the other end either has a widened part (46) which is larger than the internal dimensions of the tubular casing (36) or also carries a flange.

2. Testing cushion according to Claim 1, characterized in that the internal diameter of the tubular casing (34) is at least thirty per cent of the external diameter of the outer casing (20).

3. Testing cushion according to Claim 1 or 2, characterized in that the tubular casing (34) has reinforcing threads, preferably nylon threads, which run in the axial direction and are resistant to tensile force and are flexible.

4. Testing cushion according to one of Claims 1 to 3, characterized in that the tubular piece (40) has sufficient mechanical strength for it not to be deformed when loaded at the nominal filling pressure for which the pipe sealing cushion is designed.

5. Testing cushion according to one of Claims 1 to 4, characterized in that in the internal space (36) the inside of one end wall (for example 24) is connected to the adjacent outer face of the tubular casing (34) by an annular part (38), preferably by an annular part which L-shaped in radial section.

6. Testing cushion according to one of Claims 1 to 7, characterized in that the tubular casing (34) does not project at the end faces beyond the contour of the end faces (22, 24).

7. Testing cushion according to one of Claims 1 to 6, characterized in that the end walls (22, 24) are curved convexly and are preferably constructed as spherical caps whereof the radius is greater than the radius of the outer casing (20) (when not under tension) and preferably corresponds to approximately half the overall length of the pipe sealing cushion.

8. Testing cushion according to one of Claims 1 to 7, characterized in that the axes of the outer casing (20) and of the tubular casing (34) run parallel to one another and preferably have a spacing from one another which is between a whole radius and half a radius of the tubular piece (40).

**Revendications**

1. Coussin d'essai avec passage, possédant une enveloppe cylindrique extérieure (20) en matériau caoutchouteux armé et deux parois d'extrémité (22, 24) réalisées en matériau caoutchouteux, qui sont mutuellement assemblées étanches à l'air dans un moule, par vulcanisation à chaud et avec utilisation d'une pression à l'intérieur, en délimitant un volume intérieur (36) accessible à travers un raccord (26) incorporé dans l'une des parois d'extrémité (22 par exemple), chacune des parois d'extrémité (22, 24) présentant une ouverture (32) et les deux ouvertures (32) étant reliées l'une à l'autre par un flexible s'étendant à travers le volume intérieur (36), de manière que soit formé ainsi le passage, lequel est étanche vis-à-vis du volume intérieur et permet la traversée d'un fluide, caractérisé en ce que le flexible est formé par une paroi tubulaire (34) en matériau caoutchouteux armé, qui est mise en place avant la vulcanisation à chaud et qui, lors de la vulcanisation, est reliée par ses bouts aux deux parois d'extrémité (22, 24), que cette paroi tubulaire (34) contient un tronçon de tube (40) en matériau rigide, par exemple en métal ou matière plastique, qui touche par sa surface extérieure le côté intérieur de la paroi tubulaire (34), que le tronçon de tube (40) fait saillie par rapport aux deux parois d'extrémité (22, 24) et porte à un bout, de préférence du côté de la paroi d'extrémité (22) contenant le raccord (26), une bride (42), tandis que son autre bout présente, soit un évasement (46) qui est plus grand que les dimensions intérieures de la paroi tubulaire (34), soit également une bride.

2. Coussin d'essai selon la revendication 1, caractérisé en ce que le diamètre intérieur de la paroi tubulaire (34) correspond à au moins trente pourcent du diamètre extérieur de l'enveloppe (20).

3. Coussin d'essai selon la revendication 1 ou 2, caractérisé en ce que la paroi tubulaire (34) présente des fils d'armure, de préférence des fils de Nylon, qui sont flexibles, résistants à la traction et orientés axialement.

4. Coussin d'essai selon une des revendications 1 à 3, caractérisé en ce que le tronçon de tube (40) est suffisamment solide, mécaniquement, pour qu'il ne soit pas déformé lorsque le coussin d'essai est chargé par la pression de remplissage nominale pour laquelle le coussin est conçu.

5. Coussin d'essai selon une des revendications 1 à 4, caractérisé en ce que, dans son volume intérieur (36), le côté intérieur d'une paroi d'extrémité (24 par exemple) est relié à la surface extérieure adjacente de la paroi tubulaire (34) par une pièce annulaire (38), de préférence par une pièce annulaire de forme en L en coupe radiale.

6. Coussin d'essai selon une des revendications 1 à 5, caractérisé en ce que le bout de la paroi tubulaire (34) ne fait pas saillie du contour des parois d'extrémité (22, 24).

7. Coussin d'essai selon une des revendications 1 à 6, caractérisé en ce que les parois d'extrémité (22, 24) ont une courbure convexe et sont réalisées de préférence sous forme de calottes sphériques dont le rayon est plus grand que le rayon de l'enveloppe extérieure (20) (à l'état détendu) et correspond de préférence à peu près à la moitié de la longueur totale du coussin d'essai.

8. Coussin d'essai selon une des revendications 1 à 7, caractérisé en ce que les axes de l'enveloppe extérieure (20) et de la paroi tubulaire (34) sont parallèles et sont de préférences espacés mutuellement d'une distance comprise entre le rayon et la moitié du rayon du tronçon de tube (40).

EP 0 300 169 B1